# EUROPEAN PATENT APPLICATION

(11) **EP 3 282 276 A1**
(43) Date of publication of application: **14.02.2018**
(21) Application number: 16306051.0
(22) Date of filing: 12.08.2016
(51) Int. Cl.: G01S 5/02, G01S 5/10

(54) **POSITION DETECTION OF USER EQUIPMENT WITHIN A NETWORK**

(71) Applicant: Nokia Technologies Oy, 02610 Espoo (FI)
(72) Inventor: XIONG, Zhilan, Bristol BS32 4UF (GB); ROBERT, Michel, 91620 Nozay (FR)
(74) Representative: Leppard, Andrew John

(57) **Abstract**

The position detection of user equipment within a wireless telecommunications network is disclosed. Abase station method comprises receiving at least one reference signal time difference measurement report from a user equipment whose location is to be determined by the base station; calculating a position for the user equipment using the at least one reference signal time difference measurement report from the user equipment; and providing the position for the user equipment. In this way, the base station or serving node of the user equipment can quickly position the user equipment using the measurement reports provided by the user equipment. This speeds determining the position of the user equipment, as it avoids long latency delays which are otherwise incurred should the positioning have needed to be determined instead by a location server, which could be geographically remote from the base station and which would typically communicate using slower, higher-layer protocol messaging - by the time that the location server determines the position, the actual position of the user equipment may well have changed. By determining the position in the base station, the accuracy of that position is much greater (and the positioning error lower) than would otherwise be possible, particularly for fast-moving user equipment.

## Description

### FIELD OF THE INVENTION

The field of the invention relates to the position detection of user equipment within a wireless telecommunications network.

### BACKGROUND

Observed time difference of arrival (OTDOA) is a downlink positioning method used in networks for detecting a user equipment's position. In particular, network nodes transmit position reference signals (PRSs) and these are detected by user equipment (UE). The time of arrival (ToA) of the different PRSs at the user equipment from the network nodes is determined. A reference signal time difference measurement (RSTD) is made at the user equipment based on the ToA of the different PRSs at the user equipment, from which the UE's location can then be derived.

It is desirable to be able to increase the accuracy of positional measurement for user equipment.

### SUMMARY

According to a first aspect, there is provided one. The first aspect recognises that existing OTDOA approaches are designed primarily for positioning stationary UE or lower-speed UE (for example 3km/h or less). When the UE's speed increases, the existing PRS configuration, the RSTD measurement and the RSTD reporting mechanisms for OTDOA positioning will result in serious positioning error due to RSTD measurement reporting delay. For example, if the RSTD measurement time is 16*160ms = 2560ms and the UE speed is 30km/h, then this UE moves at least 21m during each RSTD measurement time. If the UE speed is 100km/h, then this UE moves at least 71m during each RSTD measurement time. In addition to the RSTD measurement time is the RSTD reporting time to communicate the RSTD measurements to a location server, for the location server to process that information and to provide a position. As 160ms is the shortest period for one PRS occasion (the other configurable periods for one PRS occasion are 320ms, 640ms and 1280ms), this positioning error values are lower bounds and the position error increases with increases in latency between the UE and the location server. Hence, in existing arrangements, the UE reports the RSTD measurement results to the location server and the location server is responsible for the OTDOA positioning of this UE. The latency of the RSTD measurement and reporting in this arrangement is not suitable for the accurate OTDOA positioning of mid-speed and high-speed UE. Accordingly, the first aspect provides an approach to support OTDOA lower-error positioning for non-stationary UEs. In particular, a two-step structure for OTDOA positioning with non-stationary UE is provided. With this approach, the serving node (for example eNB) may perform the OTDOA positioning for the UE according to received RSTD measurement results from the UE for quick positioning and the location server may perform the relevant integrated navigation and positioning application according to collected positioning information from the eNBs .

Accordingly, a method performed by a base station may be provided. The method may comprise the step of receiving or being provided with one or more reference signal time difference measurement reports from a user equipment. The method may also comprise calculating or determining a position for the user equipment based on the reference signal time difference measurement report(s) from that user equipment. The method may also comprise providing or transmitting the position of the user equipment. In this way, the base station or serving node of the user equipment can quickly position the user equipment using the measurement reports provided by the user equipment. This speeds determining the position of the user equipment, as it avoids long latency delays which are otherwise incurred should the positioning have needed to be determined instead by a location server, which could be geographically remote from the base station and which would typically communicate using slower, higher-layer protocol messaging - by the time that the location server determines the position, the actual position of the user equipment may well have changed. By determining the position in the base station, the accuracy of that position is much greater (and the positioning error lower) than would otherwise be possible, particularly for fast-moving user equipment.

In one embodiment, the providing comprises transmitting the position for the user equipment to at least one of the user equipment and a location server. Accordingly, the position maybe transmitted to the user equipment and/or a location server.

In one embodiment, the calculating the position and providing the position occurs at least one of periodically and aperiodically. Accordingly, the position may be provided either on a regular or an as-requested basis.

In one embodiment, the calculating comprises calculating the position for the user equipment using the at least one reference signal time difference measurement report from the user equipment and other location information for the user equipment. Accordingly, the position may be determined using one or more reference signal time difference measurement reports, together with other location information provided for the user equipment.

In one embodiment, the method comprises transmitting positioning reference signal configuration information to the user equipment. Accordingly, the configuration of the position reference signal may be transmitted to the user equipment from the base station.

In one embodiment, the method comprises transmitting reference signal time difference measurement report configuration information to the user equipment. Accordingly, the configuration of the reference time signal difference measurement report may be transmitted to the user equipment by the base station.

In one embodiment, the method comprises transmitting at least one positioning reference signal to the user equipment. Accordingly, the base station may transmit one or more positioning reference signals to the user equipment.

In one embodiment, the method comprises receiving at least one of the positioning reference signal configuration information, the reference signal time difference measurement report configuration information and positioning reference signal from a location server. Accordingly, the position reference signal configuration information and/or the reference signal time difference measurement report configuration and/or the position reference signal may be received at the base station from a location server.

In one embodiment, the method comprises instructing the user equipment to provide the at least one reference signal time difference measurement report. Accordingly, the user equipment may be instructed or commanded by the base station to provide one or more reference signal time difference measurement reports.

In one embodiment, the instructing comprises instructing the user equipment to provide the at least one reference signal time difference measurement report at least one of periodically and aperiodically. Accordingly, the base station may instruct the user equipment to provide those measurement reports on a regular or an as-requested basis.

In one embodiment, the calculating comprises calculating an observed time difference of arrival position as the position for the user equipment using the at least one reference signal time difference measurement report from the user equipment. Accordingly, the reference signal time difference measurement reports maybe used to determine an observed time difference of arrival position for the user equipment.

According to a second aspect, there is provided a base station, comprising: reception logic operable to receive at least one reference signal time difference measurement report from a user equipment whose position is to be determined by the base station; calculating logic operable to calculate a position for the user equipment using the at least one reference signal time difference measurement report from the user equipment; and logic operable to provide the position for the user equipment.

In one embodiment, the logic is operable to transmit the position for the user equipment to at least one of the user equipment and a location server.

In one embodiment, the calculating logic is operable to calculate the position and the logic is operable to provide the position at least one of periodically and aperiodically.

In one embodiment, the calculating logic is operable to calculate the position for the user equipment using the at least one reference signal time difference measurement report from the user equipment and other location information for the user equipment.

In one embodiment, the base station comprises transmission logic operable to transmit positioning reference signal configuration information to the user equipment.

In one embodiment, the base station comprises transmission logic operable to transmit reference signal time difference measurement report configuration information to the user equipment.

In one embodiment, the base station comprises transmission logic operable to transmit at least one positioning reference signal to the user equipment.

In one embodiment, the base station comprises reception logic operable to receive at least one of the positioning reference signal configuration information, the reference signal time difference measurement report configuration information and positioning reference signal from a location server.

In one embodiment, the base station comprises instructing logic operable to instruct the user equipment to provide the at least one reference signal time difference measurement report.

In one embodiment, the instructing logic is operable to instruct the user equipment to provide the at least one reference signal time difference measurement report at least one of periodically and aperiodically.

In one embodiment, the calculating logic is operable to calculate an observed time difference of arrival position as the position for the user equipment using the at least one reference signal time difference measurement report from the user equipment.

According to a third aspect, there is provided a user equipment method, comprising: receiving a request from a base station to provide at least one reference signal time difference measurement report; determining the at least one reference signal time difference measurement report; and providing the at least one reference signal time difference measurement report to the base station.

In one embodiment, the determining the at least one reference signal time difference measurement report and providing the at least one reference signal time difference measurement report occurs at least one of periodically and aperiodically.

In one embodiment, the method comprises receiving positioning reference signal configuration information from the base station.

In one embodiment, the method comprises receiving reference signal time difference measurement report configuration information from the base station.

In one embodiment, the method comprises receiving at least one positioning reference signal from base stations from which the at least one reference signal time difference measurement report is determined.

In one embodiment, the method comprises receiving a position of the user equipment from the base station.

In one embodiment, the request instructs the user equipment to provide the at least one reference signal time difference measurement report at least one of periodically and aperiodically.

According to a fourth aspect, there is provided user equipment, comprising: reception logic operable to receive a request from a base station to provide at least one reference signal time difference measurement report; determining logic operable to determine the at least one reference signal time difference measurement report; and logic operable to provide the at least one reference signal time difference measurement report to the base station.

In one embodiment, the determining logic is operable to determine the at least one reference signal time difference measurement report and the logic is operable to provide the at least one reference signal time difference measurement report at least one of periodically and aperiodically.

In one embodiment, the user equipment comprises reception logic operable to receive positioning reference signal configuration information from the base station.

In one embodiment, the user equipment comprises reception logic operable to receive reference signal time difference measurement report configuration information from the base station.

In one embodiment, the user equipment comprises reception logic operable to receive at least one positioning reference signal from base stations from which the at least one reference signal time difference measurement report is determined.

In one embodiment, wherein the request instructs the user equipment to provide the at least one reference signal time difference measurement report at least one of periodically and aperiodically.

In one embodiment, the user equipment comprises reception logic operable to receive a position of the user equipment from the base station.

According to a fifth aspect, there is provided a location server method, comprising: instructing a base station to request a user equipment, whose position is to be determined by the base station, to provide a position of the user equipment; and receiving the position of the user equipment from the base station.

In one embodiment, the instructing comprises instructing the base station to request the user equipment to provide at least one reference signal time difference measurement report from which the position is derived.

In one embodiment, the instructing and the receiving occurs at least one of periodically and aperiodically.

In one embodiment, the method comprises calculating an enhanced position of the user equipment using the position from the base station and other location information for the user equipment.

In one embodiment, the method comprises transmitting positioning reference signal configuration information to the base station.

In one embodiment, the method comprises transmitting reference signal time difference measurement report configuration information to the base station.

According to a sixth aspect, there is provided a location server, comprising: instructing logic operable to instruct a base station to request a user equipment, whose position is to be determined by the base station, to provide a position of the user equipment; and reception logic operable to receive the position of the user equipment from the base station.

In one embodiment, the instructing logic is operable to instruct the base station to request the user equipment to provide at least one reference signal time difference measurement report from which the position is derived.

In one embodiment, the instructing logic is operable to instruct and the reception logic is operable to receive at least one of periodically and aperiodically.

In one embodiment, the location server comprises calculating logic operable to calculate an enhanced position of the user equipment using the position from the base station and other location information for the user equipment.

In one embodiment, the location server comprises transmission logic operable to transmit positioning reference signal configuration information to the base station.

In one embodiment, the location server comprises transmission logic operable to transmit reference signal time difference measurement report configuration information to the base station.

According to a seventh aspect, there is provided a computer program product operable, when executed on a computer, to perform the method of any one of the first, third or fifth aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a positioning according to one embodiment; and
Figure 2 illustrates network signalling according to one embodiment.

### DESCRIPTION OF THE EMBODIMENTS

Before discussing the embodiments in any more detail, first an overview will be provided. Embodiments provide an arrangement whereby a serving base station instructs served user equipment to provide reference signal time difference measurement reports generated by the user equipment in response to position reference signals provided by base stations in the proximity of that user equipment. Using these reference signal time difference measurement reports, the base station itself is then able to locate or position the user equipment. The base station can then provide that position to the user equipment and/or other nodes in the network. Enabling the base station to determine the position of the user equipment improves the accuracy of the position reported, particularly for fast-moving user equipment, and can reduce network signalling compared to existing arrangements where such positioning is determined solely by a location server. The location server may also provide an enhanced position based on other location information available to that location server. Also, the location server may optimize the set of nodes used for particular user equipment and/or particular serving base stations which are used to provide the positioning reference signal. The location server may additionally optimize the position reference signal configuration for such nodes. Typically, user equipment may be instructed to provide their reference signal time difference measurement reports, either in response to individual requests for such reports, or periodically until instructed otherwise.

### Network Structure

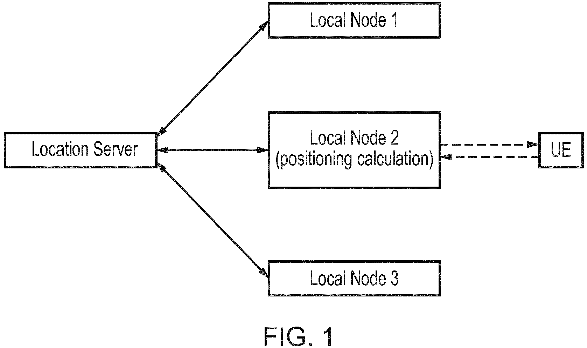

As illustrated in Figure 1, in order to support the OTDOA positioning, which is particularly useful for non-stationary UEs, embodiments provide a two-stage positioning technique where:
- The location server is responsible for the integrated positioning/navigation and relevant applications based on the OTDOA positioning information (directly/indirectly) from the local nodes as well as other positioning information; and
- The local node is responsible for the OTDOA positioning calculation of its served (attached) UEs.

It will be appreciated that the location server includes an evolved-Serving Mobile Location Centre (E-SMLC)/ Gateway Mobile Location Centre - Control Plane (GMLC (CP)) or Secure User Plane Location Platform - User Plane (SUPL (UP)) in existing networks. It will also be appreciated that the local node could be an evolved node B (eNB), small cell, positioning beacon or other network node/unit.

The benefit of this two-stage positioning structure (i.e. distributed structure) is to achieve a quick response for the position updates of high-speed UEs since no higher-layer protocol messaging needs to occur between the local node and location server, which extends the time period taken to determine the location of the UE. Instead, the location is determined by the local node which provides for faster and therefore more accurate location determination to be made.

### Location Server

The location server contains logic which is operable to provide a range of enhanced functionality including one or more of the following:
- Optimization of the PRS configuration for each local node;
- Optimization of the cooperation node set of local nodes used in OTDOA positioning;
- Optimization of the cooperation node set for specific UE used in OTDOA positioning;
- Collecting UE positions from each local node (cooperation node);
- Collecting UE information from each local node (cooperation node);
- Collecting Reference Signal Received Power (RSRP) information from each local node (cooperation node);
- Collecting position information of each PRS transmission node (local node);
- Collecting PRS configuration information for each PRS transmission node (local node);
- Requesting OTDOA positioning for specific UE either periodically or aperiodically;
- Sending the PRS configuration information of one node to another node;
- Sending the PRS configuration information of one node to this node itself;
- Sending the UE-specific OTDOA reporting configuration information to each of its local nodes;
- Sending the cell-specific OTDOA reporting configuration information to each of its local nodes;
- Sending the position information of one node to another node;
- Sending the position information of one node to this node itself;
- Sending the UE position information to another node;
- Integrated positioning/ navigation for specific UE according to receive positioning information related to this UE; and
- Sending RSTD measurement report configuration for specific UE.

### Local Node

The local nodes contain logic which is operable to provide a range of enhanced functionality including one or more of the following:
- Transmitting PRS signalling;
- Reporting the UE position to the location server;
- Reporting the UE position to the UE;
- Sending PRS configuration information to a specific UE;
- Sending RSTD measurement report configuration to a specific UE;
- Requesting RSTD measurement reporting from specific UE;
- Requesting OTDOA positioning capability information from specific UE;
- Positioning the specific UE according to received RSTD measurement information and/or other information; and
- Optimizing the cooperation node set for specific UE in OTDOA positioning.

### User Equipment

The UE contain logic which is operable to provide a range of enhanced functionality including one or more of the following:
- RSTD measurement and reporting;
- OTDOA positioning capacity report;
- PRS measurement for ToA estimation; and
- Positioning request, for example OTDOA positioning request.

### Examples

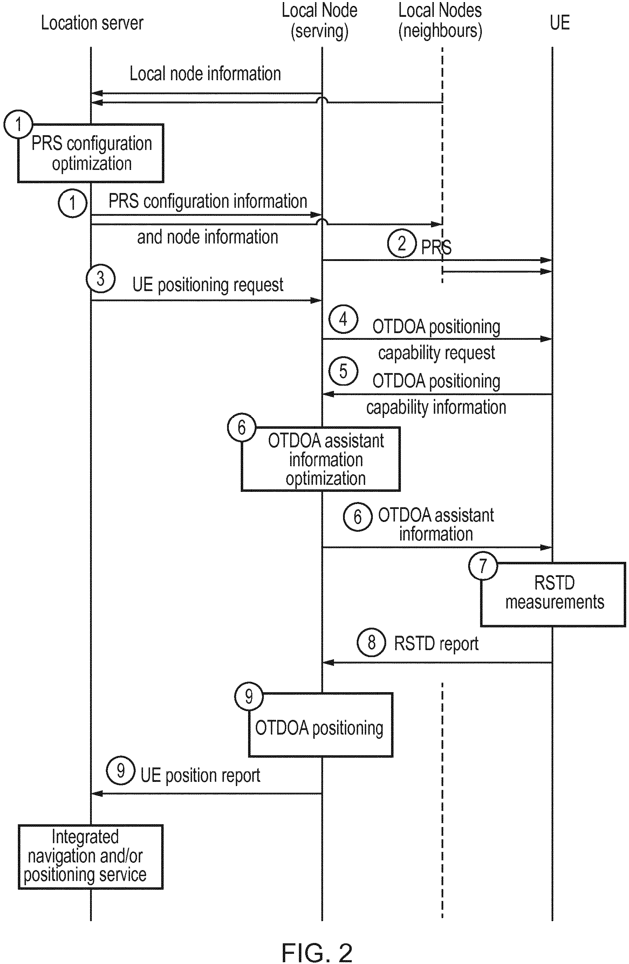

Figure 2 illustrates network signalling according to one embodiment which illustrates two-stage OTDOA positioning with partial key signalling and processes.

At step 1, the location server optimizes and sends PRS configuration information and node position information to its local nodes (serving and neighbours) in the cooperation node sets.

At step 2, PRS transmission nodes (local nodes in the cooperation node sets) transmit PRS according to received PRS configuration information.

As step 3, the location server sends the positioning request to the serving node of one specific UE in one of the cooperation node sets.

At step 4, the serving node sends an OTDOA positioning capability request to this specific UE.

At step 5, the UE sends the information for supporting OTDOA positioning to its serving node.

At step 6, the serving node selects and sends the OTDOA assistant information to the UE. The RSTD measurements and reporting configuration information may also be included.

At step 7, the UE estimates time of arrival and corresponding RSTD values based on the received PRS configuration information and received PRSs.

At step 8, the UE reports the RSTD measurements results to its serving node. These RSTD measurement results may be provided periodically or aperiodically.

At step 9, the serving node itself calculates the OTDOA positioning for this UE and reports the OTDOA positioning information to the location server and/or to the UE. Again, calculating the OTDOA positioning and reporting the OTDOA positioning information may occur periodically or aperiodically.

It will be appreciated that embodiments have the potential to improve the positioning accuracy of OTDOA for non-stationary UEs. Compared to the existing techniques, this approach has the potential to provide higher positioning accuracy but using fewer resources.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station method, comprising:
receiving at least one reference signal time difference measurement report from a user equipment whose position is to be determined by said base station;
calculating a position for said user equipment using said at least one reference signal time difference measurement report from said user equipment; and
providing said position for said user equipment.

2. The method of claim 1, wherein said providing comprises transmitting said position for said user equipment to at least one of said user equipment and a location server.

3. The method of claim 1 or 2, wherein said calculating said position and providing said position occurs at least one of periodically and aperiodically.

4. The method of any preceding claim, wherein said calculating comprises calculating said position for said user equipment using said at least one reference signal time difference measurement report from said user equipment and other location information for said user equipment.

5. The method of any preceding claim, comprising transmitting at least one of positioning reference signal configuration information, reference signal time difference measurement report configuration information and at least one positioning reference signal to said user equipment.

6. The method of claim 5, comprising receiving at least one of said positioning reference signal configuration information, said reference signal time difference measurement report configuration information and positioning reference signal from a location server.

7. The method of any preceding claim, comprising instructing said user equipment to provide said at least one reference signal time difference measurement report.

8. The method of any claim 7, wherein said instructing comprises instructing said user equipment to provide said at least one reference signal time difference measurement report at least one of periodically and aperiodically.

9. The method of any preceding claim, wherein said calculating comprises calculating an observed time difference of arrival position as said position for said user equipment using said at least one reference signal time difference measurement report from said user equipment.

10. Abase station, comprising:
reception logic operable to receive at least one reference signal time difference measurement report from a user equipment whose position is to be determined by said base station;
calculating logic operable to calculate a position for said user equipment using said at least one reference signal time difference measurement report from said user equipment; and
logic operable to provide said position for said user equipment.

11. A user equipment method, comprising:
receiving a request from a base station to provide at least one reference signal time difference measurement report;
determining said at least one reference signal time difference measurement report; and
providing said at least one reference signal time difference measurement report to said base station.

12. User equipment, comprising:
reception logic operable to receive a request from a base station to provide at least one reference signal time difference measurement report;
determining logic operable to determine said at least one reference signal time difference measurement report; and
logic operable to provide said at least one reference signal time difference measurement report to said base station.

13. A location server method, comprising:
instructing a base station to request a user equipment, whose position is to be determined by said base station, to provide a position of said user equipment; and
receiving said position of said user equipment from said base station.

14. A location server, comprising:
instructing logic operable to instruct a base station to request a user equipment, whose position is to be determined by said base station, to provide a position of said user equipment; and
reception logic operable to receive said position of said user equipment from said base station.

15. A computer program product operable, when executed on a computer, to perform the method of any one of claims 1 to 9, 11 and 13.

## Amended claims

### Amended claims in accordance with Rule 137(2) EPC.

1. A method performed by a base station, comprising:
receiving (8) at least one reference signal time difference measurement report from a user equipment whose position is to be determined by said base station;
calculating (9) a position for said user equipment using said at least one reference signal time difference measurement report from said user equipment; and
providing said position for said user equipment.

2. The method of claim 1, wherein said providing comprises transmitting said position for said user equipment to at least one of said user equipment and a location server.

3. The method of claim 1 or 2, wherein said calculating said position and providing said position occurs one of periodically and aperiodically.

4. The method of any preceding claim, wherein said calculating comprises calculating said position for said user equipment using said at least one reference signal time difference measurement report from said user equipment and other location information for said user equipment.

5. The method of any preceding claim, comprising transmitting at least one of positioning reference signal configuration information, reference signal time difference measurement report configuration information and at least one positioning reference signal to said user equipment.

6. The method of claim 5, comprising receiving at least one of said positioning reference signal configuration information, said reference signal time difference measurement report configuration information and positioning reference signal from a location server.

7. The method of any preceding claim, comprising instructing said user equipment to provide said at least one reference signal time difference measurement report.

8. The method of any claim 7, wherein said instructing comprises instructing said user equipment to provide said at least one reference signal time difference measurement report one of periodically and aperiodically.

9. The method of any preceding claim, wherein said calculating comprises calculating an observed time difference of arrival position as said position for said user equipment using said at least one reference signal time difference measurement report from said user equipment.

10. A base station, comprising:
reception logic operable to receive at least one reference signal time difference measurement report from a user equipment whose position is to be determined by said base station;
calculating logic operable to calculate a position for said user equipment using said at least one reference signal time difference measurement report from said user equipment; and
logic operable to provide said position for said user equipment.

11. A method performed by a user equipment, comprising:
receiving (6) a request from a base station to provide at least one reference signal time difference measurement report;
determining (7) said at least one reference signal time difference measurement report; and
providing (8) said at least one reference signal time difference measurement report to said base station.

12. User equipment, comprising:
reception logic operable to receive a request from a base station to provide at least one reference signal time difference measurement report;
determining logic operable to determine said at least one reference signal time difference measurement report; and
logic operable to provide said at least one reference signal time difference measurement report to said base station.

13. A method performed by a location server, comprising:
instructing (3) a base station to request a user equipment, whose position is to be determined by said base station, to provide a position of said user equipment; and
receiving (9) said position of said user equipment from said base station.

14. A location server, comprising:
instructing logic operable to instruct a base station to request a user equipment, whose position is to be determined by said base station, to provide a position of said user equipment; and
reception logic operable to receive said position of said user equipment from said base station.

15. A computer program product operable, when executed on a computer, to perform the method of any one of claims 1 to 9, 11 and 13.
